# EUROPÄISCHE PATENTSCHRIFT

(11) **EP 2 502 597 B1**
(45) Veröffentlichungstag und Bekanntmachung des Hinweises auf die Patenterteilung: **16.11.2016**
(21) Anmeldenummer: 12160282.5
(22) Anmeldetag: 20.03.2012
(51) Int. Cl.: A61C 1/05

(54) **Medizinisches Turbinen-Handstück mit Rücksaugstopp**
Medicinal turbine hand tool with back pressure stop
Pièce à main médicale à turbine avec arrêt de refoulement

(30) Priorität: 21.03.2011 DE 102011005870
(43) Veröffentlichungstag der Anmeldung: 26.09.2012
(73) Patentinhaber: Kaltenbach & Voigt GmbH, 88400 Biberach (DE)
(72) Erfinder: Rösch, Thomas, 88447 Warthausen (DE); Flock, Alexander, 89077 Ulm (DE)
(74) Vertreter: Thun, Clemens

(56) Entgegenhaltungen:
- EP-A1- 0 830 848
- EP-A1- 1 671 600
- EP-A2- 1 086 657
- DE-C1- 4 428 039
- US-A- 3 310 285
- US-A- 5 334 013

## Beschreibung

Die vorliegende Erfindung betrifft ein medizinisches Handstück zum Antrieb von rotierenden medizinischen Werkzeugen, wobei das Werkzeug mit einer Antriebswelle verbindbar ist, die durch eine in dem Handstück angeordnete Turbine mit Hilfe eines Druckmittels angetrieben ist. Bevorzugt handelt es sich bei dem Druckmittel um Druckluft.

Bei einem solchen Turbinen-Handstück ist ein Turbinenrad in einer im Wesentlichen runden Turbinenkammer frei drehbar gelagert. Das Druckmittel wird durch eine sich längs im Handstück erstreckende Zuführleitung zugeführt, die durch eine Einlassöffnung in der Turbinenkammer auf das Turbinenrad strömt, das Turbinenrad in Rotation versetzt und die Turbinenkammer durch eine Auslassöffnung und eine sich daran anschließende Abführleitung verlässt. Der Antrieb der Turbine wird durch das Schließen eines Ventils in der Zuführleitung abgeschaltet. Da das Handstück mit sehr hohen Drehzahlen betrieben wird, läuft das Turbinenrad nach Abschaltung der Druckmittelzufuhr noch eine beträchtliche Zeit nach, wobei es das Druckmittel aus der Turbinenkammer in die Abführleitung drückt und somit als Pumpe wirkt. Der dabei in der Turbinenkammer entstehende Unterdruck bedingt eine Sogwirkung unter anderem in Luftspalten im Bereich der Halterung für die medizinischen Werkzeuge bzw. im Bereich der Lagerung des Turbinenrades. Dies ist unerwünscht, da Krankheitserreger in die Bereiche des Handstücks eingesaugt werden können, die nur eine unzureichende Desinfektion ermöglichen oder im schlimmsten Fall nicht mit üblichen Desinfektionsmaßnahmen erreichbar sind.

Aus der EP 1 086 657 A2 ist ein zahnärztliches Turbinenhandstück bekannt, bei dem ein äußerer Bereich der Turbinenkammer durch einen Verbindungskanal mit einem unterhalb des Betätigungselements für die Werkzeughalterung bestehenden Hohlraum oder mit einem achsnahen Ringkanal verbunden ist.

Aus der US 5,334,013 ist ein Turbinenhandstück bekannt, bei dem der Abluftkanal die Turbinenkammer mit der zum Werkzeug weisenden Außenwandfläche des Handstückkopfs verbindet.

Aus der EP 0 830 848 A1 ist ein Handstück gemäss dem Oberbegriff des Anspruchs 1 bekannt, bei dem die Turbinenkammer und der Rückluftkanal über einen Verbindungskanal verbunden sind.

Aus der US 3,310,285 ist ein dentales Turbinenhandstück bekannt, dessen Turbine mit einem Luftlager drehbar gelagert ist.

Insbesondere hat sich herausgestellt, dass eine Sogwirkung bevorzugt in einem achsnahen Bereich des Turbinenrades auftritt, während in achsfernen Randbereichen ein Überdruck erzeugt wird, sodass Bereiche der Antriebswelle bzw. des zugehörigen Lagerbereichs mit Krankheitserregern kontaminiert werden. Aufgabe der Erfindung ist es deshalb, hier Abhilfe zu schaffen, und den Eintrag von Fremdluft zu minimieren. Diese Aufgabe wird mit Hilfe der Merkmale des unabhängigen Anspruchs 1 gelöst. Weiterbildungen sind Gegenstand der abhängigen Ansprüche.

Erfindungsgemäß ist ein medizinisches, insbesondere dentalmedizinisches Turbinen-Handstück vorgesehen, mit einer im vorderen Endbereich des Handstücks drehbar gelagerten Antriebswelle, mit der ein Werkzeug verbindbar ist, sowie einem auf der Antriebswelle drehfest angeordneten Turbinenrad, welches in einer in dem Endbereich ausgebildeten Turbinenkammer angeordnet ist, in welche an einer Einlassöffnung eine Zuführleitung für ein strömendes Druckmittel zum Antrieb des Turbinenrades mündet und von der sich an einer Auslassöffnung eine Abführleitung erstreckt, wobei in der Wand der Turbinenkammer zumindest ein Querverbindungskanal für das Druckmittel ausgebildet ist, der den Randbereich der Turbinenkammer mit einem zur Antriebswelle achsnahen Bereich der Turbinenkammer verbindet.

Die Erfindung beruht somit auf der Idee die Druckverhältnisse in einem zur Antriebswelle bzw. zur Drehachse des Turbinenrades oder Werkzeuges achsnahen Bereich der Turbinenkammer an die Druckverhältnisse eines achsfernen Bereichs anzugleichen und dabei den Eintrag von Fremdluft in die Turbinenkammer zu verhindern. Dies kann bevorzugt mit einem kurzen, d.h. im Wesentlichen einem Wandabschnitt der Turbinenkammer folgenden Verbindungskanal, der zwischen den beiden besagten Bereichen einen Druckmittelaustausch ermöglicht, realisiert werden.

In einer Weiterbildung der Erfindung verläuft der Querverbindungskanal getrennt von der Turbinenkammer durch die Wand der Turbinenkammer.

Dies kann insbesondere bei Wandabschnitten der Turbinenkammer sinnvoll sein, die zu einer Verlängerung des Verbindungsweges führen würden und so einen schnellen Luftaustausch behindern würden.

Bevorzugt ist der Wandbereich der Turbinenkammer mehrteilig ausgebildet. Beispielsweise kann das Gehäuse des Turbinen-Handstücks einen Wandabschnitt der Turbinenkammer bilden und auch ein Halterungselement für das Turbinenrad bzw. die Antriebswelle, wobei das Halterungselement bevorzugt mit dem Gehäuse druckmitteldicht verbindbar ausgebildet ist. In diesem Fall kann vorgesehen sein, dass der Querverbindungskanal zumindest abschnittsweise in einem Wandabschnitt des Halterungselements für das Turbinenrad bzw. die Antriebsachse mit entsprechenden Lagermitteln angeordnet ist.

In einer Weiterbildung der Erfindung ist das Halterungselement als Sprayelement zur Abgabe eines medizinischen Fluids ausgebildet.

Somit ergeben sich verschiedene Vorteile in der Herstellung und Montage des Turbinen-Handstücks, welche die Möglichkeiten zur Verbesserung der Luftführung und des Druckausgleichs deutlich erhöhen. Beispielsweise ist es möglich ein Sprayelement, welches gleichzeitig als Halterungselement für die Antriebswelle ausgebildet ist, mit einem oder mehreren Querverbindungskanälen zu versehen, sodass der Halterungsbereich der Antriebswelle bzw. des Turbinenrades schnell mit Druckmittel aus dem achsfernen Randbereich der Turbinenkammer bzw. des Turbinenrades in Kommunikation gebracht werden kann. Insbesondere ist davon auszugehen, dass Bereiche der Antriebswelle mit entsprechenden Lagermitteln schwierig zu desinfizieren sind und es deshalb besonders vorteilhaft ist, den Eintrag von Fremdluft bzw. Serum in diese Bereiche zu verhindern.

Besonders bevorzugt weist der Querverbindungskanal eine Einlassöffnung und eine Auslassöffnung für das Druckmittel auf, wobei beispielsweise der Querschnitt der Öffnungen geringer sein kann, als die Länge des Querverbindungskanals. Somit ergibt sich die Möglichkeit die Druckmittelführung in dem Querverbindungskanal als bevorzugt laminare Strömung auszubilden, die einen schnellen Druckmittelaustausch zwischen beiden besagten Bereichen ermöglicht.

Erfindungsgemäß ist der Wandbereich des Querverbindungskanals im Wesentlichen eben mit zueinander parallelen Flächen ausgebildet, sodass auch damit ein laminares Strömungsverhalten gefördert werden kann. Dies kann beispielsweise durch die Abschlussfläche des Turbinenrades realisiert sein, die beispielsweise einem Wandabschnitt des Turbinengehäuses im wesentlichen parallel folgt. Beispielsweise könnte so ein Querverbindungskanal in Form eines Ringkanals realisiert sein.

Gemäß der Erfindung weist der Wandbereich des Querverbindungskanals mehrere gleichartige Vorsprünge bzw. Vertiefungen auf.

Bevorzugt übersteigt das Flächenmaß ebener Bereiche des Wandbereichs das Flächenmaß der Vorsprünge bzw. Vertiefungen.

Somit kann die Strömung ebenfalls gerichtet werden und einen schnellen Druckausgleich fördern. Beispielsweise kann mit Hilfe der Vorsprünge bzw. Vertiefungen, die bevorzugt eine gemeinsame Richtung einer Vorzugsausdehnung aufweisen, die Zirkulation des Druckmittels in eine bestimmte Richtung, beispielsweise quer zur Vorzugsausdehung der Vorsprünge bzw. Vertiefungen, behindert oder unterdrückt werden, sodass eine Vorzugsrichtung der Druckmittelzirkulation erreicht werden kann. Beispielsweise kann dies besonders dienlich für Querverbindungskanäle sein, deren Einlassöffnung größer als die Auslassöffnung ausgebildet ist. Besonders bevorzugt sind die Vorsprünge bzw. Vertiefungen in einem Wandbereich des Querverbindungskanals angeordnet, während eine gegenüberliegende Wand des Querverbindungskanals eben ausgebildet ist, um so die Strömung optimiert zu Querverbindungskanälen zu formen.

In allen beschriebenen Ausführungsbeispielen und Aspekten der Erfindung ist es insbesondere förderlich, dass der Ausgleich eines Druckunterschieds des Druckmittels zwischen dem achsnahen Bereich und dem achsfernen Bereich der Turbinenkammer schneller erfolgt, als der Eintrag von Fremdluft in den achsnahen Bereich. Darüberhinaus ist zu betonen, dass es sich bei dem Querverbindungskanal stets um eine zusätzliche Verbindung von achsnahen und achsfernen Bereichen der Turbinenkammer handelt, die neben einer Verbindung der Einlassöffnung mit der Auslassöffnung ausgebildet ist, wobei letztere beispielsweise auch durch die Luftführung in dem Turbinenrad selbst realisiert sein könnte.

Nachfolgend soll die Erfindung anhand der beiliegenden Zeichnung näher erläutert werden, wobei gleiche Elemente in allen Darstellungen mit den gleichen Bezugszeichen versehen sind. Es zeigen:
- Fig. 1: ein Ausführungsbeispiel eines erfindungsgemäßen Turbinen-Handstücks;
- Fig. 2 und 2a: Details der Druckmittelzirkulation in dem Turbinen-Handstück;
- Fig. 3: ein weiteres Ausführungsbeispiel eines erfindungsgemäßen Turbinenhandstücks;
- Fig. 4: Details eines Halteelementes für das Turbinenrad;
- Fig. 5: Details eines weiteren Ausführungsbeispiels des Haltelements;
- Fig. 6: die Anordnung des Haltelements gemäß Fig. 5 in einem Ausführungsbeispiel desTurbinen-Handstücks; sowie
- Fig. 7: Details der Anordnung des in Fig. 6 gezeigten Halteelements.

Im Einsatz von medizinischen Geräten ist es unabdingbar, dass diese in hygienisch einwandfreien Zustand gehalten werden können. Bei medizinischen, insbesondere dentalmedizinischen Handstücken zum Antrieb rotierender medizinischer Werkzeuge gestaltet sich dies besonders schwierig.

Häufig weisen diese Handstücke eine komplizierte Anordnung von kommunizierenden Hohlräumen auf, die beispielsweise von Antriebselementen bzw. deren Aufnahmen und Halterungen gebildet werden. Darüberhinaus ist es jedoch unumgänglich einen Zugang zu einem Teil dieser Aufnahmen bzw. Halterungen zu schaffen, um eine ordnungsgemal3e Funktionalität des Handstücks durch Pflegemaßnahmen zu gewährleisten. Insbesondere bei dentalmedizinischen Handstücken, die eine Werkzeugrotation zwischen 300.000 und 450.000 U/min gewährleisten müssen, ist ein medien- bzw. serumdichter Abschluss aller Hohlräume des Handstücks deshalb nahezu ausgeschlossen.

Insbesondere im dentalmedizinischen Bereich ist die Verwendung sogenannter Turbinen-Handstücke üblich, die ein im Wesentlichen frei drehbares Turbinenrad zum Antrieb eines rotierenden Werkzeugs in einer Turbinenkammer aufnehmen. Der Antrieb des Turbinenrades erfolgt dabei mit Hilfe eines Druckmittels. Das Druckmittel wird durch eine sich längs im Handstück erstreckende Zuführleitung über eine Einlassöffnung der Turbinenkammer zugeführt, die durch eine Einlassöffnung in der Turbinenkammer auf das Turbinenrad strömt, das Turbinenrad in Rotation versetzt und die Turbinenkammer durch eine Auslassöffnung und eine sich daran anschließende Abführleitung verlässt. Ein positiver Nebeneffekt der Verwendung eines Druckmittels, das gegenüber dem Umgebungsdruck einen erhöhten Eigendruck aufweist, ist dass das Eindringen von Fremdluft oder Serum und in Hohlräume und somit auch die Kontamination der Hohlräume mit Krankheitserregern wirksam verhindert wird.

Der Antrieb der Turbine kann durch Unterbrechung der Druckmittelzufuhr zu der Einlassöfffiung der Turbine gestoppt werden; aufgrund der Massenträgheit des Turbinenrades rotiert dieses über eine beträchtliche Zeitspanne nach der Unterbrechung der Druckmittelzufuhr weiter, läuft also nach, sodass die Turbine eine Sogwirkung entfaltet, unter anderem in Spalten im Bereich der Halterung für die medizinischen Werkzeuge, sodass die Gefahr des Einbringens externer Krankheitserreger stark erhöht ist.

Die vorliegende Erfindung ist dazu ausgebildet hier Abhilfe zu schaffen.

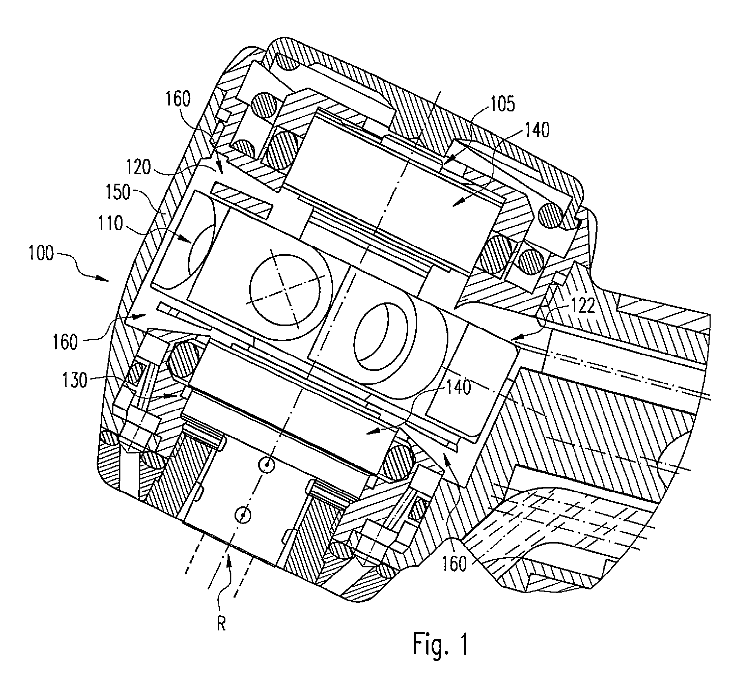

Figur 1 zeigt ein Ausführungsbeispiel eines dentalmedizinischen Turbinen-Handstücks 100 als sogenanntes Winkelhandstück. Das Handstück weist ein Gehäuse 150 auf, mit einem länglichen Griffbereich der gegenüber der Drehachse R eines dentalmedizinischen Werkzeugs geneigt ist. Es ist zu betonen, dass die Erfindung nicht auf Winkelhandstücke beschränkt ist; auch andere Ausführungsformen sind denkbar, die beispielsweise die Zugänglichkeit einer Behandlungsstelle mit dem medizinischen Werkzeug erhöhen können. In dem vorderen Endbereich des Handstücks ist in dem Gehäuse 150 eine um die Drehachse R des Werkzeugs drehbar gelagerten Antriebswelle 105 angeordnet, mit der ein medizinisches Werkzeug, beispielsweise ein Bohr- oder Polierwerkzeug, verbindbar ist. Die Antriebswelle 105 ist mittels Hochleistungswälz- bzw. Kugellagern 140 drehbar gegenüber dem Gehäuse 150 gelagert, wobei die Wälz- bzw. Kugellager 140 und so auch mittelbar die Antriebswelle 105 mittels eines Halteelements 130 in Verbindung mit dem Gehäuse stehen. Mit der Antriebswelle 105 ist drehfest ein Turbinenrad 110 verbunden, welches in einer in dem Endbereich ausgebildeten Turbinenkammer 120 angeordnet ist. In die Turbinenkammer 120 mündet eine in Fig. 1 nicht sichtbare Einlassöffnung 122 für ein strömendes Druckmittel zum Antrieb des Turbinenrads 110 und somit der Turbine, welches über eine Zuführleitung, die sich durch den hinteren Endbereich des Handstücks erstreckt, an die Turbinenkammer 120 herangeführt wird. Darüberhinaus weist die Turbinenkammer eine Auslassöffnung 124 auf, von der sich eine ebenfalls im hinteren Endbereich des Handstücks angeordnete Abführleitung für das Druckmittel erstreckt.

In allen dargestellten Ausführungsbeispielen ist als Druckmittel Druckluft vorgesehen, jedoch ist die Erfindung nicht auf Druckluft als Druckmittel beschränkt. Beispielsweise könnten andere Gase insbesondere Stickstoff, oder auch flüssige Druckmittel wie z.B. Wasser vorgesehen sein; bevorzugt hängt dies auch vom Anwendungsfall des Turbinenhandstücks ab, wenn beispielsweise spezielle Werkzeuge gleichzeitig eine Kühlung erfordern oder eine Drehzahlregelung der Turbine beispielsweise mit Hilfe der Viskosität des Druckmittels erreicht werden soll.

Erfindungsgemäß ist nunmehr vorgesehen, dass in der Wand der Turbinenkammer 120 zumindest ein Querverbindungskanal 160 für das Druckmittel ausgebildet ist, der einen gegenüber der Drehachse R achsfernen Randbereich der Turbinenkammer 120 mit einem zur Drehachse R bzw. Antriebswelle 105 achsnahen Bereich der Turbinenkammer 120 verbindet. Die Begriffe "achsnah" bzw. "achsfern" sind dabei so zu verstehen, dass ein achsferner Bereich radial weiter von der Drehachse R bzw. Antriebswelle 105 entfernt angeordnet ist, als ein achsnaher Bereich.

Insbesondere hat sich herausgestellt, dass durch die Geometrie des Turbinenrades 110 bedingt während des "Nachlaufens" der Turbine im achsfernen Randbereich des Turbinenrades 110 ein Überdruck des Druckmittels entsteht, während sich in einem achsnahen Bereich ein Unterdruck ausbildet. Die Erfindung beruht nunmehr auf der Idee diese Druckdifferenz schnell auszugleichen, bevor dies zum Ansaugen eines Fremdmediums führen kann, insbesondere wird eine Verbindung der achsfernen Bereiche mit achsnahen Bereichen bevorzugt auf dem kürzesten Wege angestrebt. Wie im Weiteren deutlich wird, sind darüberhinaus auch andere bzw. zusätzliche Maßnahmen denkbar, die einen Druckausgleich beschleunigen.

Im dargestellten Ausführungsbeispiel könnte beispielsweise Fremdluft über Spalten zwischen Antriebsachse 105 bzw. Wälz- oder Kugellager 140 und Gehäuse 150 angesaugt werden und beispielswiese in Wälzlager 140 eindringen, welche die Antriebsachse 105 um die Drehachse R drehbar lagern und ohne umfangreiche Maßnahmen nur bedingt zur Desinfektion zugänglich sind.

Der Wandbereich der Turbinenkammer 120 folgt dabei im Wesentlichen der Umfangsform des Turbinenrades 110, ist also im Wesentlichen zylindrisch ausgebildet, wobei die Drehachse R des Werkzeugs bzw. de Antriebswelle 105 mit der Längsachse der zylindrischen Umfangsform des Turbinenrades 110 bzw. der Turbinenkammer 120 zusammenfällt. Die Turbinenkammer 120 weist nunmehr Querverbindungskanäle 160 auf, die im Wesentlichen in radialer Richtung orientiert sind und beispielsweise in Form von Schlitzen in der Wand der Turbinenkammer geführt sind.

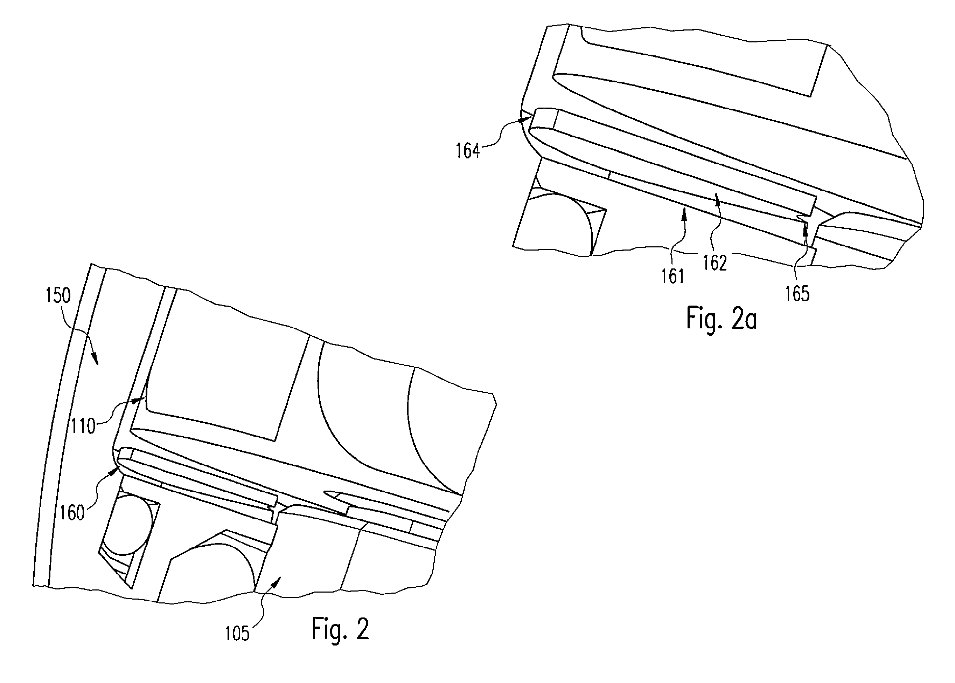

Die Figuren 2 und 2a verdeutlichen dies in einer Modifikation des Ausführungsbeispiels von Figur 1. Der Querverbindungskanal 160 bzw. Schlitz weist dabei eine Einlassöffnung 164 und eine Auslassöffnung 165 auf. Der Durchmesser der Einlass- bzw. Auslassöffnung 164 bzw. 165 ist in diesem Fall kleiner als die Länge des Schlitzes bzw. der radiale Abstand zwischen den achsfernen und achsnahen Bereichen. Mit Hilfe eines relativ dünnwandigen Trennstegs zwischen Querverbindungskanal 160 und Turbinenkammer 120, der einen ersten Wandbereich 162 des Querkanals 160 realisiert, wird dabei das Druckmittel von der Druckmittelführung in der Turbinenkammer 120, insbesondere von einem Rückführkanal 170, der das Druckmittel in der Turbinenkammer 120 der Auslassöffnung 124 zuführt, getrennt, sodass sich eigenständige Strömungsverhältnisse in dem Querkanal 160 ausbilden können, wobei dies auch durch die oben beschriebenen geometrischen Verhältnisse des Schlitzes begünstigt wird.

Besonders vorteilhaft ist in diesem Fall, wenn sich ein laminarer Druckmittelstrom zum Ausgleich des Druckunterschieds zwischen achsfernen und achsnahen Bereichen einstellt, da in diesem Fall ein besonders schneller Druckmittelstrom möglich ist. Dies kann insbesondere dadurch gefördert werden, dass ein zweiter Wandabschnitt 161 des Querverbindungskanals 160 im Wesentlichen parallel dem ersten Wandabschnitt 161 folgt. Die ersten und zweiten Wandabschnitte 162 bzw. 161 sind im Wesentlichen eben ausgebildet, jedoch kann es wie im späteren deutlich wird, dienlich sein, eine Strukturierung der Wandabschnitte 161 bzw. 162 vorzunehmen, um Vorzugstörmungsrichtungen einzustellen bzw. unbeabsichtigte Strömungen zu verhindern. Die Erfindung ist wie auch aus Figur 1 ersichtlich, nicht auf den beschriebenen Fall mit ebenen bevorzugt parallelen Wandflächen des Querkanals 160 beschränkt. Beispielsweise könnte der Querverbindungskanal 160 auch einen runden oder elliptischen Querschnitt aufweisen, sodass die bevorzugten strömungstechnisch günstigen Verhältnisse für einen schnellen Druckmittelstrom erreicht werden können.

Wie in den Figuren 1, 2 und 2a angedeutet, ist die Wand der Turbinenkammer 120 mehrteilig realisiert. Ein erster Wandabschnitt der Turbinenkammer 120, der im Wesentlichen die zylinderförmige Umfangsfläche der Turbinenkammer 120 festlegt, ist dabei durch das Gehäuse 150 gebildet. Die Deckflächen der Turbinenkammer 120 sind dabei durch Halterungselemente 130 für die Wälz- bzw. Kugellager 140 der Antriebswelle 105 bzw. des Turbinenrades 110 verschlossen, was eine Reihe von Vorteilen insbesondere in der Montage und Herstellung des Turbinen-Handstücks 100 mit sich bringt, sodass dadurch auch effektive Formen der Druckmittelführung bzw. der Ausbildung des Querverbindungskanals 160 verwirklicht werden können.

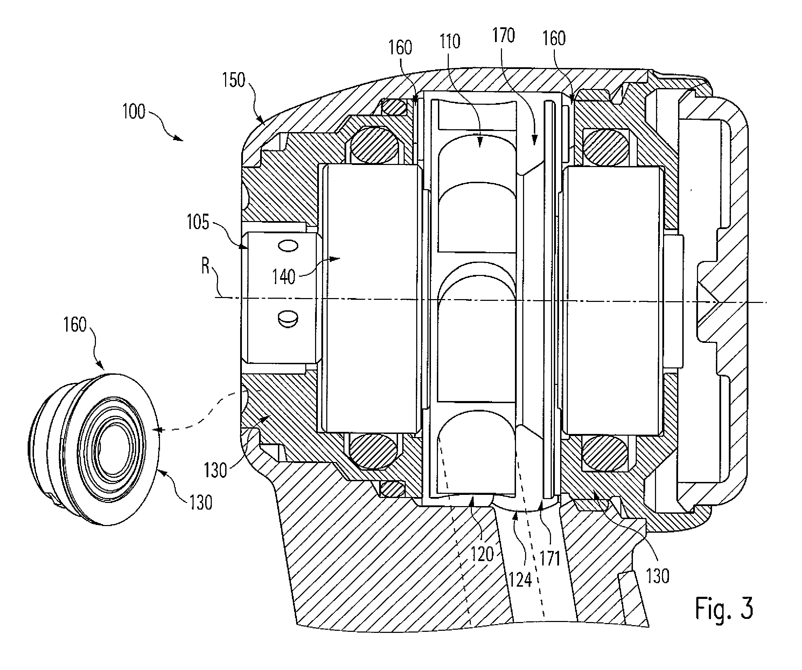

Insbesondere kann der Querverbindungskanal 160 wenigstens teilweise in dem oder den Halterungselementen 130 für die Antriebswelle 105 bzw. deren Lager 140 geführt sein. Dies ist beispielsweise im Ausführungsbeispiel der Figur 3 nochmals explizit gezeigt.

Das Turbinen-Handstück gemäß Figur 3 weist ein erstes und zweites Halterungselement 130 auf, welches jeweils die Deckseiten der zylinderförmigen Turbinenkammer 120 verschließt, und Lagermittel, insbesondere Wälz- bzw. Kugellager 140 trägt, welche das Turbinenrad 110 bzw. die zugeordnete Antriebswelle 105 drehbar lagern. Der Außenumfang der Halterungselemente 130 kann dabei durch eine Kegelstumpfform angenähert werden, wobei Einlassöffnungen 164 mehrerer Querverbindungskanäle 160 jeweils in die Mantelflächen des Kegelstumpfs bzw. in den Außenumfang, beispielsweise quer bzw. orthogonal zur Drehachse R, des Haltelements 130 eingebracht sind.

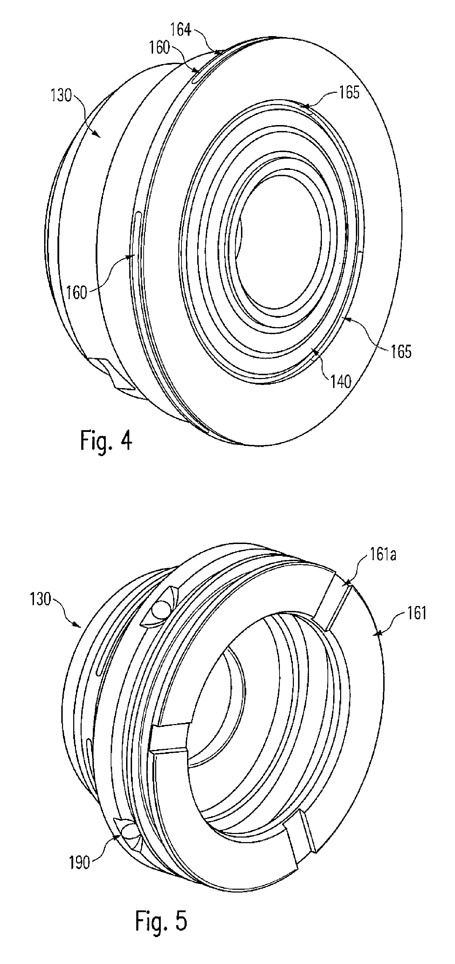

Die Halterungselemente 130 weisen eine oder mehrere zur Drehachse R parallel bzw. konzentrisch angeordnete Bohrungen zur Aufnahme der Lagermittel auf. Entsprechende Auslassöffnungen 165 der Querverbindungskanäle 160 sind dabei mit besagten Bohrungen verbunden bzw. münden in diese. Dies ist insbesondere im Detail auch der Figur 4 zu entnehmen.

Das im Ausführungsbeispiel der Figur 3 gezeigte Turbinenrad 110 realisiert in der Turbinenkammer 120 mit Hilfe eines mit dem Turbinenrad 110 verbundenen, beabstandet von Turbinenschaufeln des Turbinenrades 120 angeordneten Ringflansches 171 einen ringförmigen Rückführkanal 170 für das Druckmittel, welches im Betrieb der Turbine damit der Auslassöffnung 124 zugeführt werden kann.

Insbesondere ist der Querverbindungskanal 160 eigenständig gegenüber dem Rückführkanal 170 ausgebildet, sodass eine Unabhängigkeit des Querverbindungskanals 160 von Strömungsverhältnissen in dem Rückführkanal 170 erreicht werden kann.

Die Einlassöffnung 164 des Querverbindungskanals 160 weist in diesem Fall eine größere Querschnittfläche auf als die entsprechende Querschnittfläche der Auslassöffnung 165 des Querverbindungskanals 160. Somit ergibt sich mit einer kontinuierlichen Anpassung des Querschnitts des Querverbindungskanals 160 über seine Länge eine Beschleunigung des Druckmittels über den Verlauf des Querverbindungskanals 160. Die annähernd lineare Verbindung der Umfangslinie der Einlass- bzw. Auslassöffnung 164 bzw. 165 legt dabei einen radial zur Drehachse R nahezu trapezförmigen Querschnitt des Querverbindungskanals 160 fest, sodass sich die Querschnittfläche des Querverbindungskanals 160 über die Länge seines Verlaufs verringert.

Weiterhin sind in dem Ausführungsbeispiel über den Umfang der Turbinenkammer 120 verteilt mehrere Querverbindungskanäle 160 ausgebildet. Somit können mehrere unabhängige Wege, insbesondere mit unabhängigen Strömungsbedingungen zur Verbindung der achsnahen und achsfernen Bereiche beitragen, die beispielsweise eine Optimierung des Druckausgleichs auch bei inhomogenen Druckverhältnissen im Randbereich der Turbinenkammer 120 erreichen. Wie insbesondere in Figur 4 dargestellt, weist das Halterungselement 130 über den Umfang seiner Außen- bzw. Mantelfläche mehrere, in diesem Fall drei, Einlassöffnungen 164 auf, die jeweils mit separat in dem Halterungselement 130 geführten Querverbindungskanälen 160 in Verbindung stehen. Entsprechende Auslassöffnungen 165 der Querverbindungskanäle 160 münden in einer gemeinsamen Bohrung zur Aufnahme von Lagermitteln für die Antriebswelle 105 bzw. das Turbinenrad 110.

Eine Weiterentwicklung dieses Konzepts und ein weiterer Aspekt der Erfindung ist in dem Ausführungsbeispiel der Figuren 5 bis 7 gezeigt. Figur 5 stellt wiederum ein Halterungselement 130 dar, welches gleichzeitig als Sprayeinsatz zum Auslass eines Fluids aus dem Turbinen-Handstück 100 ausgebildet ist. Dazu sind Fluidkanäle 190 in dem Halterungselement 130 vorgesehen die im Betrieb mit Zuführungsleitungen verbunden sind, die in dem Handstück 100 angeordnet sind. Das Halterungselement 130 weist dabei eigenständige Dichtungen für die Verbindung der Fluidkanäle auf. Somit kann gleichzeitig ein Fluid in die Nähe des Werkzeugs geführt werden, ohne dass damit die Gefahr verbunden ist, dass Fluid im Fall des Nachlaufens der Turbine in die Turbinenkammer 120 gesaugt wird.

Ferner bildet das Halterungselement 130 eine im Wesentlichen plane Wandfläche 161 der Turbinenkammer 120, die in diesem Fall durch eine kreisringförmige Grundfläche des Halterungselements 130 realisiert wird.

Ein von einem Rückführkanal 170 des Druckmittels unabhängiger Querverbindungskanal 160 kann in diesem Fall mit Hilfe einer speziellen Ausbildung des Turbinenrades 110 realisiert werden, sodass das Halterungselement 130 bzw. die Wand der Turbinenkammer 120 nur einen der Wandabschnitte 161 des Querverbindungskanals 160 ausbildet.

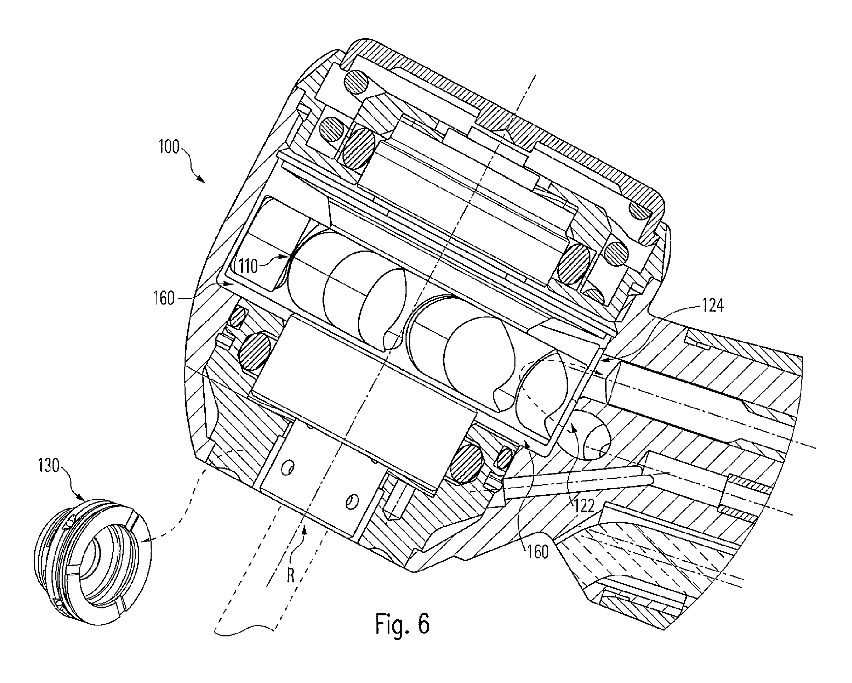

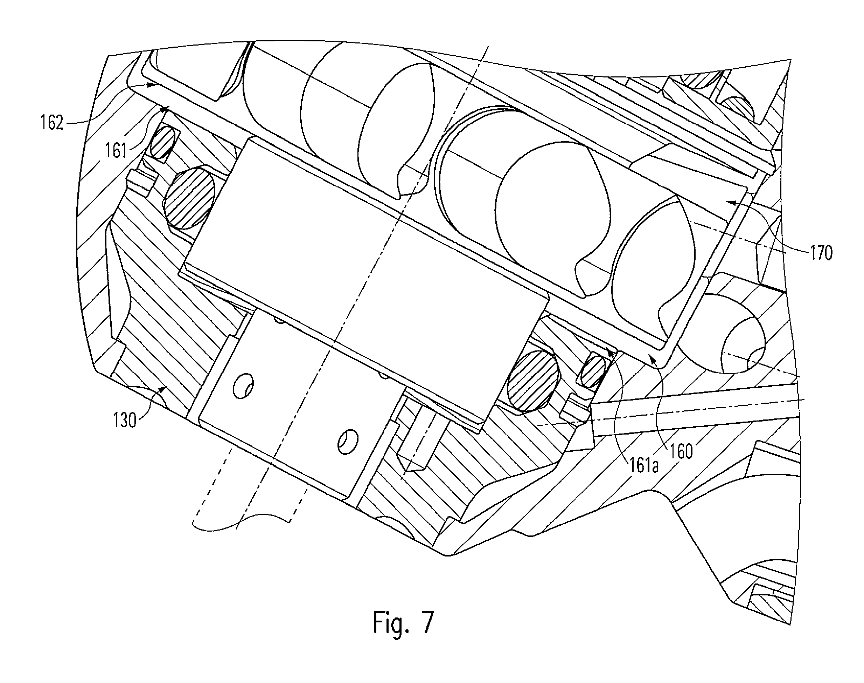

Wie insbesondere im Ausführungsbeispiel der Figuren 6 und 7 dargestellt, wird das Turbinenrad 110 von einem bezüglich der Antriebswelle 105 achsnahen Bereich bis zu einem achsfernen Randbereich durch eine Abschlussfläche druckmitteldicht begrenzt.

Diese Abschlussfläche bildet einen weiteren Wandabschnitt 162 des Querverbindungskanals 160, sodass zwischen der Wand der Turbinenkammer 120 und der Abschlussfläche ein Querverbindungskanal 160 ausgebildet ist, der den achsfernen Randbereich der Turbinenkammer 120 mit einem zur achsnahen Bereich der Turbinenkammer 120 verbindet. Das dargestellte Ausführungsbeispiel realisiert somit einen weiteren Ringkanal mit ebenen Wandabschnitten, der eine unabhängige Luftführung, getrennt von einem Rückführkanal 170 ermöglicht uns so zu einem schnelle Druckausgleich beiträgt. Insbesondere verläuft die Abschlussfläche über ihre gesamte Flächenausdehnung im Wesentlichen parallel zur dem gegenüberliegenden Wandabschnitt der Turbinenkammer 120, der den ringförmigen Querverbindungskanal 160 vervollständigt.

Eine Weiterbildung des ringförmigen Querverbindungskanals 160 ist ebenfalls in den Figuren 5 bis 7 gezeigt. Über den Umfang des Halteelements 130 bzw. der Wand der Turbinenkammer 120, bevorzugt gleichartig verteilt, können mehrere gleichartige Erhöhungen bzw. Vertiefung 161a in die plane und in diesem Beispiel kreisringförmige Wandfläche der Turbinenkammer 120 eingebracht sein. Die Erhöhungen bzw. Vertiefungen 161a können dabei zur Ausbildung einer Vorzugsströmungsrichtung genutzt werden.

Im Fall des ringförmigen Querverbindungskanals 160 des beschriebenen Ausführungsbeispiels ist beispielsweise mit einem signifikanten Anteil an Druckmittel zu rechnen, welches um die Drehachse R rotierend strömt. Für einen schnellen Druckausgleich ist jedoch eine bevorzugt laminare, radiale Strömung des Druckmittels wünschenswert. Die Wand der Turbinenkammer 120 bzw. das Halterungselement 130 weist dazu radial über die gesamte radiale Länge des in diesem Fall ringförmigen Querverbindungskanals 160 verlaufende Vertiefungsschlitze auf, welche die Ausbildung eines um die Drehachse R rotierenden Strömungsanteils des Druckmittels abmildern bzw. verhindern, beispielsweise durch die Ausbildung von lokalen Turbulenzzentren.

Neben den beschriebenen Vertiefungsschlitzen könnten an gleicher Stelle invers zu den Vertiefungsschlitzen ausgebildete, radial angeordnete Erhöhungen vorgesehen sein.

In jedem Fall ist durch die Vielzahl der Erhöhungen bzw. Vertiefungen 161a, die eine Vielzahl von nahezu unabhängigen Vorzugsströmungsrichtungen ausbilden, ebenfalls über den Umfang der Turbinenkammer 120 verteilt eine Vielzahl von Querverbindungskanälen 160 festgelegt, welche einen unabhängigen Druckausgleich ermöglichen.

Mit Hilfe der Erfindung wird also eine wirkungsvolle Möglichkeit geschaffen, schnell einen Druckausgleich zwischen einem Randbereich und einem zur Drehachse R achsnahen Bereich der Turbinenkammer 120 zu realisieren, sodass das Ansaugen von Fremdmedien durch Öffnungen des Handstücks unterdrückt werden kann. Dabei ist hervorzuheben, dass die offenbarten Merkmale aller Ausführungsbeispiele bzw. Aspekte der Erfindung miteinander kombinierbar sind.

## Patentansprüche

1. Medizinisches, insbesondere dentalmedizinisches Turbinen-Handstück (100) mit einer im vorderen Endbereich des Handstücks (100) mittels eines Wälz- oder Kugellagers (140) drehbar gelagerten Antriebswelle (105),
mit der ein Werkzeug verbindbar ist,
sowie einem auf der Antriebswelle (105) drehfest angeordneten Turbinenrad (110),
welches in einer in dem Endbereich ausgebildeten Turbinenkammer (120) angeordnet ist,
in welche an einer Einlassöffnung (122) eine Zuführleitung für ein strömendes Druckmittel zum Antrieb des Turbinenrades (110) mündet und
von der sich an einer Auslassöffnung (124) eine Abführleitung erstreckt, wobei in der Wand der Turbinenkammer (120) zumindest ein Querverbindungskanal (160) für das Druckmittel ausgebildet ist, der den achsfernen Randbereich der Turbinenkammer (120) mit einem zur Antriebswelle (105) achsnahen Bereich der Turbinenkammer (120) verbindet, **dadurch gekennzeichnet,**
**dass** der Wandbereich des Querverbindungskanals (160) im Wesentlichen eben mit zueinander parallelen Flächen ausgebildet ist, wobei mehrere gleichartige Vorsprünge bzw. Vertiefungen (161a) im Wandbereich des Querverbindungskanals (160) angeordnet sind.

2. Medizinisches Turbinen-Handstück nach Anspruch 1,
**dadurch gekennzeichnet,**
**dass** der Querverbindungskanal (160) getrennt von der Turbinenkammer (120) durch die Wand der Turbinenkammer (120) verläuft.

3. Medizinisches Turbinen-Handstück nach einem der vorhergehenden Ansprüche,
**dadurch gekennzeichnet,**
**dass** der Wandbereich der Turbinenkammer (120) mehrteilig ausgebildet ist und der Querverbindungskanal (160) zumindest abschnittsweise in einem Wandabschnitt eines Halterungselements (130) für das Turbinenrad (110) angeordnet ist, wobei bevorzugt das Halterungselement (130) als Sprayelement zur Abgabe eines medizinischen Fluids ausgebildet ist.

4. Medizinisches Turbinen-Handstück nach einem der vorhergehenden Ansprüche,
**dadurch gekennzeichnet,**
**dass** der Querverbindungskanal (160) eine Einlassöffnung (164) und eine Auslassöffnung (165) für das Druckmittel aufweist.

5. Medizinisches Turbinen-Handstück nach einem der vorhergehenden Ansprüche,
**dadurch gekennzeichnet,**
**dass** über den Umfang der Turbinenkammer (120) verteilt mehrere Querverbindungskanäle (160) ausgebildet sind.

## Claims

1. A medical turbine handpiece, in particular a dental turbine handpiece (100), having a drive shaft (105) which is rotatably mounted by means of a roller bearing or ball bearing (140) in the front end region of the handpiece (100),
to which a tool can be connected,
as well as having a turbine wheel (110) which is arranged non-rotatably on the drive shaft (105) and is arranged in a turbine chamber (120) realized in the end region,
into which turbine chamber a supply line for a flowing pressure medium for driving the turbine wheel (110) opens out at an inlet opening (122) and
from which turbine chamber a removal line extends at an outlet opening (124),
wherein at least one cross-connecting channel (160) for the pressure medium is realized in the wall of the turbine chamber (120), this cross-connecting channel connecting the edge region of the turbine chamber (120) remote from the axis to a region of the turbine chamber (120) which is axially close to the drive shaft (105),
**characterised in that**
the wall region of the cross-connecting channel (160) is realized in a substantially planar manner with faces which are parallel to each other, wherein several projections or indentations (161a) of similar type are arranged in the wall region of the cross-connecting channel (160).

2. A medical turbine handpiece according to claim 1, **characterised in that**
the cross-connecting channel (160) extends through the wall of the turbine chamber (120) separated from the turbine chamber (120).

3. A medical turbine handpiece according to one of the preceding claims,
**characterised in that**
the wall region of the turbine chamber (120) is realized in multiple parts, and the cross-connecting channel (160) is arranged at least in sections in a wall section of a mounting element (130) for the turbine wheel (110), wherein, in a preferred manner, the mounting element (130) is realized in the form of a spray element for the discharge of a medical fluid.

4. A medical turbine handpiece according to one of the preceding claims,
**characterised in that**
the cross-connecting channel (160) has an inlet opening (164) and an outlet opening (165) for the pressure medium.

5. A medical turbine handpiece according to one of the preceding claims,
**characterised in that**
several cross-connecting channels (160) are realized distributed over the circumference of the turbine chamber (120).

## Revendications

1. Pièce à main (100) à turbine à usage médical, en particulier à usage médico-dentaire, comprenant un arbre d'entraînement (105) monté de manière à pouvoir tourner au moyen d'un palier de roulement ou d'un roulement à billes (140) dans la zone d'extrémité avant de la pièce à main (100),
à laquelle un outil peut être relié,
comprenant également une roue de turbine (110) disposée de manière solidaire en rotation sur l'arbre d'entraînement (105),
laquelle roue de turbine est disposée dans une chambre à turbine (120) réalisée dans la zone d'extrémité,
dans laquelle un conduit d'amenée pour un flux de milieu sous pression servant à l'entraînement de la roue de turbine (110) débouche au niveau d'un orifice d'admission (122), et
depuis laquelle un conduit d'évacuation s'étend au niveau d'un orifice d'évacuation (124),
dans laquelle au moins un canal de liaison transversale (160) pour le milieu sous pression est réalisé dans la paroi de la chambre à turbine (120), lequel relie la zone de bord, éloignée de l'axe, de la chambre de turbine (120) à une zone, proche de l'axe en direction de l'arbre d'entraînement (105), de la chambre à turbine (120),
**caractérisée en ce**
**que** la zone de paroi du canal de liaison transversale (160) est réalisée de manière sensiblement plane avec des surfaces parallèles les unes par rapport aux autres, dans laquelle plusieurs parties faisant saillie ou renfoncements (161a) de type identique sont disposé(e)s dans la zone de paroi du canal de liaison transversale (160).

2. Pièce à main à turbine à usage médical selon la revendication 1, **caractérisée en ce**
**que** le canal de liaison transversale (160) s'étend de manière séparée de la chambre à turbine (120) à travers la paroi de la chambre à turbine (120).

3. Pièce à main à turbine à usage médical selon l'une quelconque des revendications précédentes,
**caractérisée en ce**
**que** la zone de paroi de la chambre à turbine (120) est réalisée en plusieurs parties et que le canal de liaison transversale (160) est disposé au moins par endroits dans un segment de paroi d'un élément de fixation (130) pour la roue de turbine (110), dans laquelle de manière préférée l'élément de fixation (130) est réalisé sous la forme d'un élément de pulvérisation servant à distribuer un fluide à usage médical.

4. Pièce à main à turbine à usage médical selon l'une quelconque des revendications précédentes,
**caractérisée en ce**
**que** le canal de liaison transversale (160) présente un orifice d'admission (164) et un orifice d'évacuation (165) pour le milieu sous pression.

5. Pièce à main à turbine à usage médical selon l'une quelconque des revendications précédentes,
**caractérisée en ce**
**que** plusieurs canaux de liaison transversale (160) sont réalisés de manière répartie sur le pourtour de la chambre à turbine (120).
